(19) Europäisches Patentamt
European Patent Office
Office européen des brevets

(11) **EP 1 182 826 A1**

(12) **EUROPEAN PATENT APPLICATION**
published in accordance with Art. 158(3) EPC

(43) Date of publication:
**27.02.2002 Bulletin 2002/09**

(51) Int Cl.⁷: **H04L 12/28**

(21) Application number: **01906317.1**

(22) Date of filing: **26.02.2001**

(86) International application number:
**PCT/JP01/01427**

(87) International publication number:
**WO 01/63846 (30.08.2001 Gazette 2001/35)**

(84) Designated Contracting States:
**AT BE CH CY DE DK ES FI FR GB GR IE IT LI LU MC NL PT SE TR**

(30) Priority: **28.02.2000 JP 2000051412**

(71) Applicant: **MITSUBISHI DENKI KABUSHIKI KAISHA**
**Tokyo 100-8310 (JP)**

(72) Inventors:
• **MIYAZAKI, Takuya**
**Mitsubishi Denki Kabushiki Kaisha**
**Tokyo 100-8310 (JP)**
• **KAWABATA,Takashi**
**Mitsubishi Denki Kabushiki Kaisha**
**Tokyo 100-8310 (JP)**

(74) Representative: **Pfenning, Meinig & Partner GbR**
**Mozartstrasse 17**
**80336 München (DE)**

(54) **RADIO RANDOM ACCESS CONTROL METHOD**

(57) In a radio random access control method in which a communication access zone is divided into a plurality of sectors, a range of a load regarded as a use range of a channel is converted into a range of a slot use rate, a value of the slot use rate measured in a base station is compared with the range of the slot use rate regarded as the use range of the channel, and a communication traffic volume is controlled according to the comparison of the measured value of the slot use rate with the range of the slot use rate.

FIG.9

**Description**

TECHNICAL FIELD

The present invention relates to a radio random access control method in which traffic control is performed in the sending of packet data from a plurality of subscriber stations to a base station according to a random access method in a point-to-multipoint type radio access system of communication between the base station and the subscriber stations.

BACKGROUND ART

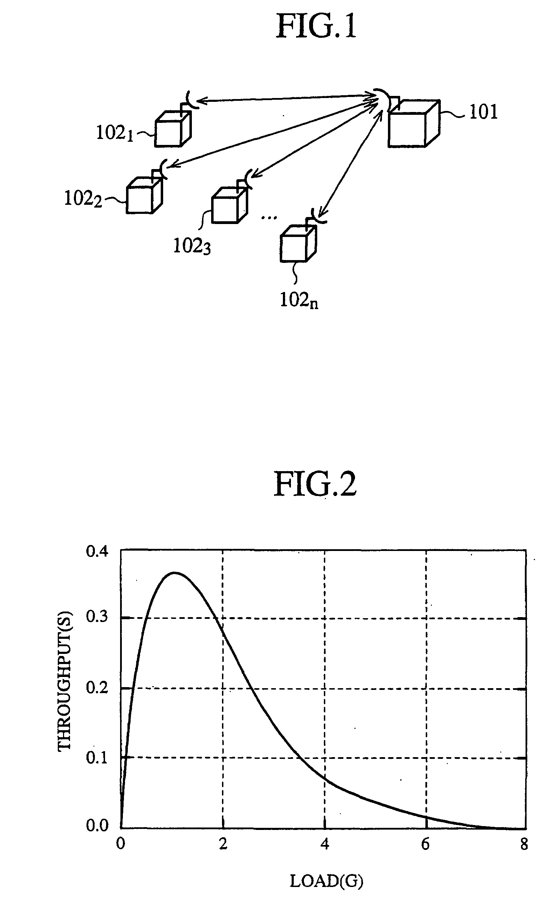

Fig. 1 is a view showing an example of a point-to-multipoint type conventional radio access system in which communication between the base station and each of a plurality of subscriber stations is performed.
In Fig. 1, 101 indicates a base station. $102_1$, $102_2$, $102_3$,---, $102_n$ are a plurality of subscriber stations. Communication is performed between the base station 101 and each subscriber station 102 by using a radio communication channel according to a time division multi-connection method.
In the above point-to-multipoint type radio access system, a slotted ALOHA method is known as an access method usually adopted. In the slotted ALOHA method, a plurality of time slots (hereinafter, simply called slots) are obtained by performing the time division for the radio communication channel, all subscriber stations gain access to the slots at random, and packet data (hereinafter, simply called a packet) is sent from each subscriber to the base station. In cases where a plurality-of packets sent on the same slot collide with each other, it is required to again send the packets. That is, only one packet of one subscriber is received in the base station for each slot in the random access based on the slotted ALOHA method. Therefore, in cases where a packet sent from one subscriber station overlaps with another packet sent from another subscriber, the packets are invalidated.
As parameters indicating characteristics of the slotted ALOHA method, a load G and a throughput S are known. The load G is defined as a ratio of the number of calls from the subscribers to the number of all random access slots used for the random access. The throughput S is defined as a ratio of the number of calls passed to the base station 101 without collision to the number of all random access slots. In case of the slotted ALOHA method, a relation

$$S = G \times e^{-G} \qquad (1)$$

is satisfied. Fig. 2 is a graph showing the relation between the load G and the throughput S in the slotted ALOHA method. As shown in the graph, to maintain each radio communication channel to good communication conditions, it is required to use the radio communication channel in a range in which the throughput is increased in case of the increase of the load. That is, it is required to use the radio communication channel according to a relation between the load and the throughput in an area of a left-sided curved line of the graph.
In cases where the random access based on the slotted ALOHA method is performed in the point-to-multipoint type radio access system, a quantity directly measurable from the side of the base station 101 is only the throughput. However, as is realized in the graph shown in Fig. 2, because there are two values of the load corresponding to one value of the throughput, there is probability that the traffic volume is not correctly estimated. Therefore, in addition to the measurement of the throughput, it is required to measure a quantity of another parameter denoting an index of the estimation of the traffic volume of packets sent from the subscriber station 102 to the base station 101. Hereinafter, the measurement of another index performed in a prior art will be described.

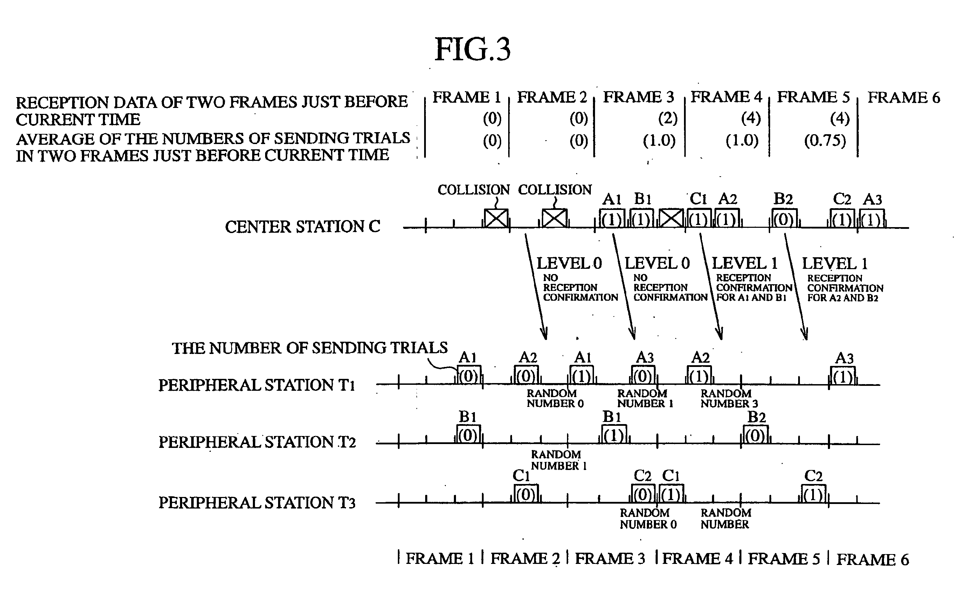

Fig. 3 is a view showing the slotted ALOHA method which is, for example, performed in a communication system described in Published Unexamined Japanese Patent Application No. H6-252917 of 1994. In this example, the increase or decrease of the traffic volume is judged in a traffic monitoring unit according to both the number of packets of two frames received just before a current time and a sum of sending trial numbers attached to the packets. The sending trial number attached to each packet denotes the number of sending trials performed for the packet. For example, in cases where the number of packets of two frames received just before a current time is equal to or higher than 1 and an average of the sending trial numbers attached to the packets is equal to or higher than 0.5, the traffic volume is judged at the current time to be a traffic level 1. Also, in other cases, the traffic volume is judged at the current time to be a traffic level 0. When a packet or a plurality of packets of each frame are received in a center station (or a base station), both a traffic level judged at the current time and a reception confirming signal are simultaneously sent from the center station to all peripheral stations (or subscriber stations) as traffic information. In each peripheral station, in cases where no reception confirming signal is received from the center station after the sending of a packet, it is assumed that packet data sent from the peripheral station to the center station is invalidated, and the packet is again sent from the peripheral station to the center station. In this resending, a random number is generated, and a plurality of packets including the resending packet are sent from the peripheral station at slot time intervals corresponding to the random number. In this example, the random number is set in a range from 0 to 3 in case of the traffic level of 1, and the random number is set in a range from 0 to 1 in case of the traffic level of 0. That is, as the traffic level is heightened, the slot time interval in the data resending is widened. Therefore, the traffic volume in a time period around a time of the data resending is reduced, and the increase of the collision of packets is prevented. Also, in cases where the traffic level is heightened because of the further increase of the traffic volume, the sending of the packets from each peripheral station to the center station can be temporarily stopped.

Also, in a slotted ALOHA method in a communication system described in Published Unexamined Japanese Patent Application No. S64-55937 of 1989, a plurality of random access slots used for the random access are considered, the number of random access slots corresponding to the collision of packets and the number of random access slots corresponding to the normal reception of packets are added up, and the traffic volume of packets sent from the subscribers is estimated according to the added value.

Also, in a slotted ALOHA method in a communication system described in Published Unexamined Japanese Patent Application No. H7-202896 of 1995, a packet is repeatedly resent from a subscriber station to a base station by using a communication channel. In cases where the number of resending operations for the packet is equal to or higher than a threshold value NT, an electric power for the packet resending is heightened, and the packet is resent. Also, there is a case where no reception confirming signal is received in each subscriber station after the heightening of the electric power for the packet resending. The number of non-reception cases occurring after the heightening of the electric power-for the packet resending is counted in a counter. In cases where the number of non-reception cases exceeds a threshold value NR, it is judged that the communication channel is congested with packets, and all packet sending requests sent from a plurality of subscriber stations are buffered after the judgment of the congestion to reduce the number of packets sent from the subscriber stations. When the counted value is lowered to a value equal to or lower than the threshold value NR, the buffering of the packet sending requests is finished, and the sending of packets is performed according to a normal sending procedure. In this case, a resending packet having a high signal intensity is preferentially received in the base station.

Because the point-to-multipoint type conventional radio access system has the above-described configuration, in cases where a traffic volume estimating method is adopted to judge the traffic volume according to the number of resending trial operations, a congestion condition of the transmission traffic can be detected when a resending operation is successfully performed after the failure of a call or a plurality of calls sent from each subscriber station with the random access. Therefore, in cases where the transmission traffic has been already congested at a burst when a packet is first sent, no traffic control is performed for the first sending of the packet, and it is impossible to perform the traffic control until the resending of the packet is successfully performed. Therefore, a problem has arisen that the traffic cannot be rapidly controlled in response to the congestion of the traffic in the point-to-multipoint type conventional radio access system.

Also, in cases where another traffic volume estimating method is adopted to judge a traffic volume by comparing a prescribed threshold value with a sum of the number of random access slots corresponding to the collision of packets and the number of random access slots corresponding to the normal reception of packets, when a communication environment is changed by increasing or decreasing the number of random access slots to perform the traffic control or to save a radio communication resource, it is required to perform a system modification in which parameters such as a threshold value are changed according to the change of the communication environment. Therefore, a problem has arisen that the point-to-multipoint type conventional radio access system cannot be flexibly applied for the change of the communication environment.

Also, because it is impossible to increase the number of random access slots in the point-to-multipoint type conventional radio access system, to control the traffic volume, only a method of lengthening the resending time interval can be adopted. Therefore, a problem has arisen that the traffic control cannot be flexibly performed in the point-to-multipoint type conventional radio access system.

The present invention is provided to solve the above-described problems, and the object of the present invention is to provide a radio random access control method in which a traffic volume is estimated according to a load in place of the number of resending operations to rapidly control the traffic volume even though the transmission traffic is increased at a burst in the first sending of a packet.

Also, the object of the present invention is to provide a radio random access control method in which a traffic volume is estimated according to a load and channel control is performed at high efficiency by performing traffic control in a stage of the packet production performed in a subscriber terminal by using characteristics of TCP/IP (Transmission Control Protocol/Internet Protocol) in cases where the traffic is congested with packets.

Also, the object of the present invention is to provide a radio random access control method which is flexibly applied for the change of a communication environment without performing a system modification on a full scale even though the communication environment is changed by increasing or decreasing the number of random access slots for the random access in a random access channel.

Also, the object of the present invention is to provide a radio random access control method in which traffic control is flexibly performed by properly using control of increasing a resending time interval and control of increasing the number of random access slots for the random access according to a channel condition.

DISCLOSURE OF THE INVENTION

A radio random access control method of the present invention comprises the steps of converting a range of a load regarded as a use range of a channel into a range of a slot use rate, comparing a value of the slot use rate measured in a base station with the range of the slot use rate regarded as the use range of the channel, and controlling a communication traffic volume according to the comparison of the measured value of the slot use rate with the range of the slot use rate.

Therefore, because the traffic control based on the load can be substantially performed, even though the traffic is changed at a burst, the traffic can be rapidly and appropriately controlled as compared with the traffic control based on a resending rate (a ratio of the number of resending operations to the number of total sending and resending operations) of packets relating to the resending time interval.

Also, the relation between the load and the slot use rate is theoretically calculated. Therefore, in cases where the communication environment is changed due to a change of the number of subscribers or another change, the range of the slot use rate can be easily obtained from the range of the load which is set according to the change of the communication environment and relates to the use of the channel. Accordingly, as compared with a method of estimating the congestion of the traffic according to the resending rate, the traffic can be flexibly controlled even though the communication environment is changed, and a point-to-multipoint type radio access system widely used can be obtained.

In a radio random access control method of the present invention, carrier detection is performed for a random access time slot or a plurality of random access time slots used in a slotted ALOHA method to obtain the value of the slot use rate, and a standby time, which extends until the resending of a packet, is controlled according to the value of the slot use rate for each sector.

Therefore, even though a traffic of packets sent from each subscriber station 102 is not maintained to a uniform volume, a traffic of packets sent from a plurality of subscriber is controlled according to the slot use rate calculated for each sector, a sudden change of the traffic is suppressed. Accordingly, the traffic can be appropriately controlled for each sector.

In a radio random access control method of the present invention, carrier detection is performed for a random access time slot or a plurality of random access time slots used in a slotted ALOHA method to obtain the value of the slot use rate, and a standby time is controlled according to the value of the slot use rate for each sector when a packet is first sent.

Therefore, because the congestion of the traffic can be reduced by lengthening a standby time according to the congestion of the traffic which is obtained from the slot use rate calculated for each sector, even though the transmission traffic has been already congested at a burst in the first sending of a packet, the congestion of the traffic can be rapidly reduced. Also, because the first sending of a packet is delayed, a total time period of the transmission of one packet from the production of the packet data to the reception of the acknowledge signal indicating the arrival of the packet in the subscriber station can be lengthened by the standby time. Therefore, in particular, as compared with a control method of buffering a data packet produced in a subscriber terminal in a subscriber station, in cases where many subscriber terminals are connected to one subscriber station, a burden on the subscriber can be reduced. Also, in cases where a subscriber station fails in the random access at a high probability due to the congestion of the random access channel , the standby time is lengthened in the first sending of a reservation packet from the subscriber station, and the number of reservation packets sent from the subscriber station can be reduced. Accordingly, in cases where a mobile communication terminal is, for example, used as a subscriber terminal, an electric power consumed in the mobile communication terminal can be reduced.

In a radio random access control method of the present invention, the number of subscriber stations receiving a notice of subscribers succeeding in the random access is limited.

Therefore, in cases where the number of subscriber stations receiving the notice of successful subscribers in the random access is appropriately set, an area of an information notifying channel, which is occupied by a plurality of identification numbers of the successful subscribers of the random access described in the notice, can be reduced. Accordingly, a radio resource can be effectively used.

In a radio random access control method of the present invention, the number of random access slots is increased according to the load in the random access for each sector.

Therefore, in cases where the load on an arbitrary sector is high, the congestion of-the traffic of the arbitrary sector is controlled so as to increase the number of random access slots relating to the arbitrary sector by adding a random access slot or a plurality of random access slots. Therefore, because reservation packets are transmitted through the added random access slots, the traffic of the arbitrary sector is dispersed, the collision of reservation packets of the subscriber stations of the arbitrary sector are decreased, and the throughput is increased. Accordingly, because the number of reservation packets resent from the subscriber stations is decreased, the traffic volume can be effectively controlled. Also, in cases where the number of random access slots is dynamically changed, because the traffic is not estimated or controlled according to the number of random access slots actually used but is estimated and controlled according to the slot use rate, it is not required to change threshold values relating to a use range of the channel. Accordingly, even though the communication environment is dynamically changed, the traffic can be flexibly controlled in the point-to-multipoint type radio access system.

In a radio random access control method of the present invention, either processing of increasing the number of random access slots or processing of increasing a standby time extending until the sending of a reservation packet is selected according to a congestion condition of a time division multiple access channel having a reserved transmission TDMA slot or a plurality of reserved transmission TDMA slots, which are used to send data packets, in a case of a random access slot reservation composite method in which the reservation packet is sent with the random access to request a reservation for one reserved transmission TDM slot of the base station.

Therefore, because the number of reservations of the reserved transmission TDMA slots can be increased or decreased, the traffic volume of a TDMA channel can be maintained to an optimum condition.

BRIEF DESCRIPTION OF THE DRAWINGS

Fig. 1 is a view showing an example of a point-to-multipoint type conventional radio access system.
Fig. 2 is a view showing a relation between a load and a throughput in a slotted ALOHA method.
Fig. 3 is a view showing the slotted ALOHA method performed in a conventional communication system.
Fig. 4 is a view showing an example of a point-to-multipoint type radio access system in which a radio random access control method according to the present invention is adopted.
Fig. 5 is a view showing a frame configuration used in a random access slot reservation composite method which is an example of the radio random access control method according to the present invention.
Fig. 6 is a view showing the configuration of a base station and the configuration of a subscriber station in the radio access system in which the radio random access control method of the present invention is adopted.
Fig. 7 is a view showing an example of the random access for one frame.
Fig. 8 is a graph showing a relation between a load and a slot use rate in a slotted ALOHA method.
Fig. 9 is a view showing a range of the slot use rate corresponding to a range of the load set as a use range of the channel.
Fig. 10 is a flow chart showing a method in which a traffic volume is estimated for each sector to perform the traffic control based on the estimated traffic volume.
Fig. 11 is a graph showing a relation between the slot use rate and a throughput in the slotted ALOHA method.
Fig. 12 is a view showing an example of timing of the sending of a reservation packet to a reserved transmission TDMA slot.
Fig. 13 is a view showing the procedure in which a subscriber station get access to an external server.
Fig. 14 is a schematic view showing an example of a method of limiting the number of random access trials successfully performed.
Fig. 15 is a graph showing both a relation between the load and the throughput in both a case of the limitations on subscriber stations receiving the notice of successful subscribers in the random access and a case of no limitation on subscriber stations receiving the notice of successful subscribers in the random access.
Fig. 16 is a schematic view showing a method of increasing the number of random access slots for each sector.

BEST MODE FOR CARRYING OUT THE INVENTION

Hereinafter, the best mode for carrying out the present invention will now be described with reference to the accompanying drawings to explain the present invention in more detail.

EMBODIMENT 1

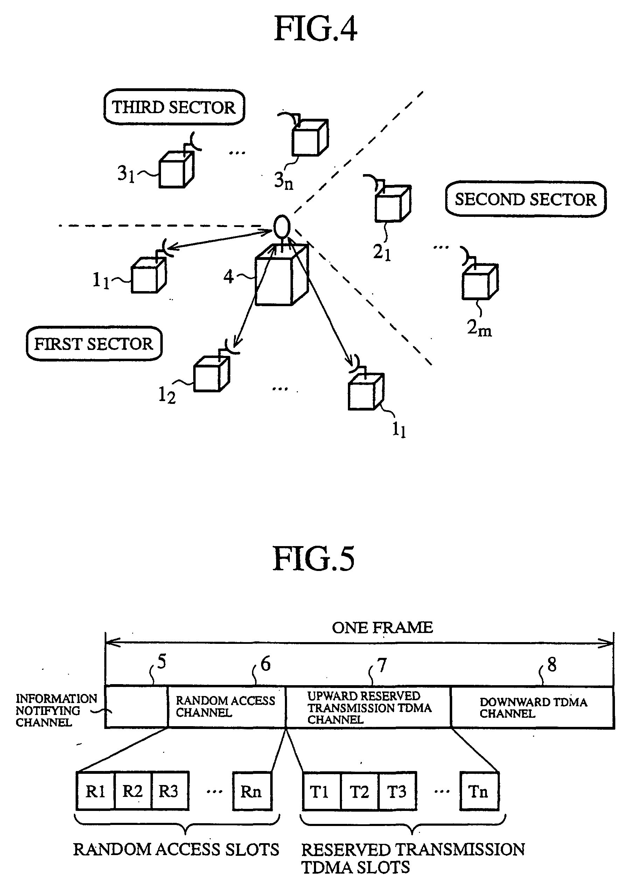

Fig. 4 is a view showing an example of a communication system used as a point-to-multipoint type radio access system. In the radio access system shown in Fig. 4, for the purpose of both the protection from electromagnetic waves interfering with communication and the reduction of an electric power required for the sending of a packet, an access zone is divided into a plurality of partial zones called a plurality of fin-shaped sectors. The sectors are placed around a base station. Each subscriber station belongs to one of the sectors. In Fig. 4, $1_1$, $1_2$,---, $1_1$ indicate a plurality of subscriber stations belonging to a first sector. $2_1$, $2_2$,---, $2_m$ indicate a plurality of subscriber stations belonging to a second sector. $3_1$, $3_2$,---, $3_n$ indicate a plurality of subscriber stations belonging to a third sector. 4 indicates a base station. In the radio access system shown in Fig. 4, the access zone is divided into three sectors respectively having 120 degrees. This point-to-multipoint type radio access system comprises the base station 4 and the subscriber stations 1, 2 and 3 in the same manner as that of the communication system shown in Fig. 1. However, the communication system shown in Fig. 4 differs from that shown in Fig. 1 in that the communication between the base station 4 and the subscriber stations belonging to one sector is simultaneously performed by using an antenna of a high directivity. The communication from the base station 4 to each subscriber station is performed by using a time division multiplexer (TDM). Also, the communication from each subscriber station to the base station 4 is performed by using a time division multiple access (TDMA) method. However, as is apparent in the following description about a communication system, each subscriber station admitted to send a data packet (or a plurality of data packets) by using one TDMA slot (or a plurality of TDMA slots) is limited to a subscriber station which successfully obtains a right of use of the TDMA slot by sending a reservation packet with the random access based on the slotted ALOHA method. Here, the reservation packet denotes a packet which requires the reservation of a reserved transmission TDMA slot used for the reserved transmission to send a data packet in cases where a random access slot reservation composite method described later is used.

Also, as a random access method used in the radio random access system of the present invention, a random access slot reservation composite method obtained by modifying the slotted ALOHA method is adopted. The random access slot reservation composite method will be simply described. When transmission data is produced in a subscriber station, a reservation packet is sent to a random access slot used for the random access according -to the slotted ALOHA method. In response to the successful reception of the reservation packet (or the passage of the reservation packet), when a notice indicating the allocation of a reserved transmission TDMA slot to the subscriber station is sent from the base station 4 and is received in the subscriber station, a data packet is sent from the subscriber station to the base station 4 by using the allocated reserved transmission TDMA slot.

Next, the configuration of a frame used in this random access slot reservation composite method will be described. A plurality of transmission and receiving signals transmitted between the base station 4 and the subscriber stations 1, 2 and 3 are controlled for each information unit. The information units has a cycle corresponding to a prescribed time period called one frame. Fig. 5 is a view showing the configuration of a frame used in the random access slot reservation composite method which is used in the communication system of the present invention. As is described above, the TDMA method is adopted in the present invention. In this method, each frame is divided into a plurality of units called a plurality of time-divided slots, each slot accommodates data packet, and the data packets are transmitted. Here, time-lengths of the slots are the same as each other, and the synchronization between the base station 4 and the subscriber stations 1 to 3 is maintained. As is described below, the slots of each frame are classified into a plurality of channels. Each channel corresponds to one purpose. Also, in the present invention, a time division duplex (TDD) method is adopted to make a frequency used in an upward channel be equal to that used in a downward channel.

In Fig. 5, 5 indicates an information notifying channel composed of a plurality of slots to simultaneously send a plurality of identification numbers of subscribers, from which the base station 5 receives reservation packets, and traffic information at a broadcast mode from the base station 4 to the subscriber stations 1 to 3. Information of a plurality of identification numbers of subscribers who successfully get the random access to the base station 4, a plurality of identification numbers of subscribers who are admitted to use a TDMA channel and a congestion condition of channels and control information are sent from the base station 5 to the subscribers for each sector by using the information notifying channel 5.6 indicates a random access channel composed of a plurality of random access slots. Reservation packets are sent from the subscriber stations to the base station 4 according to the slotted ALOHA method by using the upward random access channel 6. In the random access channel 6, a plurality of random access slots R1, R2, R3,--- and Rn are arranged for each frame, and each subscriber station selects one random access slot at random to send a reservation packet. Also, it is possible to simultaneously send a top packet of a buffer with the reservation packet by using the random access channel 6. 7 indicates a reserved transmission TDMA channel. In this reserved transmission TDMA channel 7, a plurality of reserved transmission slots T1, T2, T3,--- and Tn are arranged for each frame. When a subscriber obtains a right of the transmission reservation by sending a reservation packet to the base station 4 with random access based on the slotted ALOHA method, a reserved transmission TDMA slot is appropriately allocated to the subscriber, and the subscriber sends a data packet by using the reserved transmission TDMA slot. Also, 8 indicates a TDM channel. The TDM channel 8 is used for the data transmission from the base station 4 to one subscriber station through the downward TDM channel 8. Here, in the base station 4, any slot can be freely allocated to a sector arbitrarily selected.

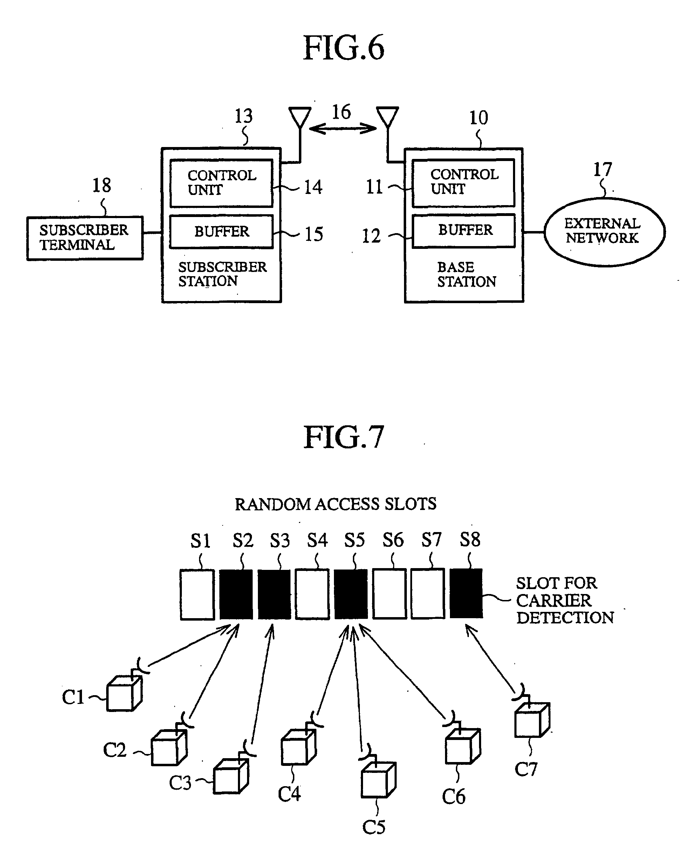

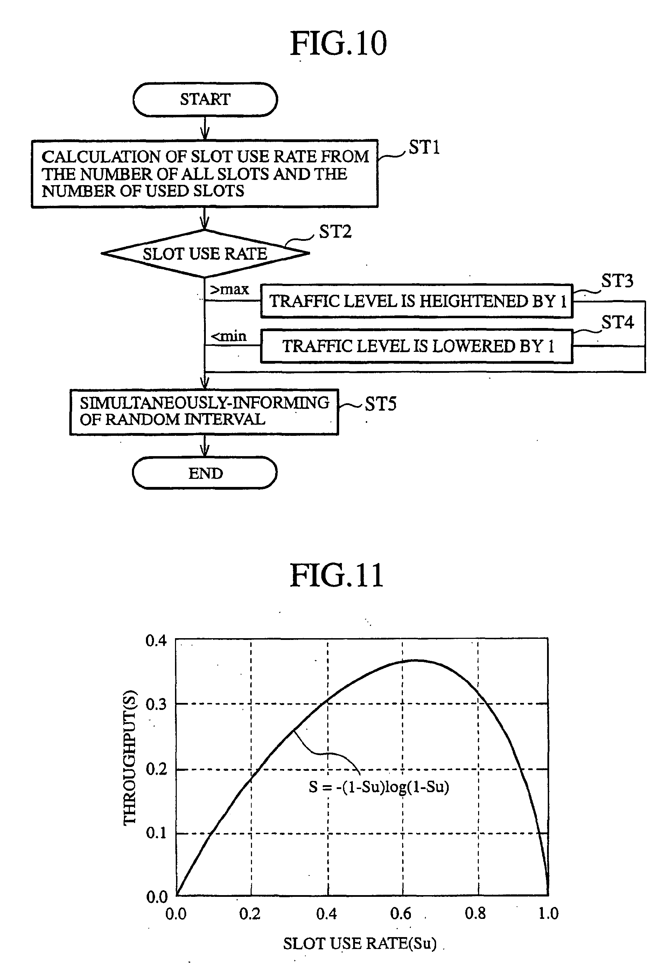

Next, the configuration of a base station and the configuration of a subscriber station will be described below. Fig. 6 is a view showing the configuration of a base station and the configuration of a subscriber station in the point-to-multipoint type radio access system of the present invention. In Fig. 6, 10 indicates a base station. 11 indicates a control unit of the base station 10. 12 indicates a buffer of the base station 10. 13 indicates a subscriber station. 14 indicates a control unit of the subscriber station 13. 15 indicates a buffer of the subscriber station 13. 16 indicates a radio communication channel between the base station 10 and the subscriber station 13. 17 indicates an external network such as an internet connected to the base station 10. 18 indicates a subscriber terminal connected to the subscriber station 13.

Next, a sending and receiving operation performed between the base station 10 and the subscriber station 13 will be described in brief.

Data for the external network 17 is produced in the subscriber terminal 18 and is transmitted to the subscriber station 13. Thereafter, the data is divided into a plurality of packet units and is once stored in the buffer 15 of the subscriber station 13. Each packet unit corresponds to a transmission slot. Thereafter, the subscriber station 13 has a wait during a passing time of a plurality of frames of a prescribed number depending on a degree of the congestion of a transmission traffic, the subscriber station 13 selects one slot at random from the random access slots R1, R2, R3,--- and Rn existing in one frame, and a reservation packet is sent from the subscriber station 13 to the base station 10 by using the radio communication channel 16 to reserve a reserved transmission TDMA slot. In the base station 10, identification numbers of subscribers, who can get successfully random-access to the base station 10 and can correctly reserve reserved transmission TDMA slots, are collected, a plurality of reserved transmission TDMA slots are allocated to the subscribers according to the collected identification numbers, and an informative notice indicating a list of the subscribers and the allocation result of the reserved transmission TDMA slots is simultaneously transmitted to the subscriber stations 13 at the broadcast mode. In each subscriber station 13, each of the data packets is sent to the base station 10 according to the informative notice sent from the base station 10 by using one of the reserved transmission TDMA slots T1, T2, T3,--- and Tn.

Next, a plurality of operations indicating features of the present invention in the packet sending and reception performed between the base station 10 and the subscriber station 13 will be described in detail. The operations are classified into an operation for detecting a degree of the traffic congestion (1), an operation for controlling the traffic congestion (2), an operation for limiting the number of random access trials successfully performed (3) and an operation for increasing the number of random access trials successfully performed (4).

(1) An operation for detecting a degree of the traffic congestion

Fig. 7 is a view showing an example of the random access for one frame. In Fig. 7, S1 to S8 indicate a plurality of random access slots. C1 to C7 indicate a plurality of subscriber stations. As shown in Fig. 7, all the subscriber stations C1 to C7 perform the random access to the random access slots. In this case, the four random access slots S2, S3, S5 and S8 are used, and the two random access slots S3 and S8 denote passing slots. Therefore, the subscriber stations C3 and C7 successfully perform the random access. In this specification, a ratio of the number of used random access slots to a frame to the number of all random access slots to a frame is defined as a slot use rate regardless of whether the subscriber stations successfully perform the random access or fail in the random access. In this case, a load is equal to 7/8, a slot use rate is equal to 4/8, and a throughput is equal to 2/8.

Next, a method of actually using the communication channel will be described. A range of the load on the subscriber traffic is determined in advance in a stage of the design. Because only the slot use rate and the throughput can be directly measured in the base station 10, a range of the load set as a use range of the channel is converted into a range of the slot use rate.

A symbol N denotes the number of subscribers, a symbol G denotes the load, and a symbol Su denotes the slot use rate. When a probability that one subscriber sends a reservation packet to each random access slot is indicated by a symbol P, P = G/N is satisfied. Here, because the slot use rate denotes a ratio of the number of slots, to which at least one subscriber station perform the random access, to the number of all random access slots to a frame, the slot use rate Su can be expressed according to a following equation.

$$Su = 1 - (1 - P)^N = 1 - (1 - G/N)^N \qquad (2)$$

When the number N of subscribers is sufficiently high, $N \to \infty$ can be set. Therefore,

$$Su = 1 - e^{-G} \qquad (3)$$

is obtained.

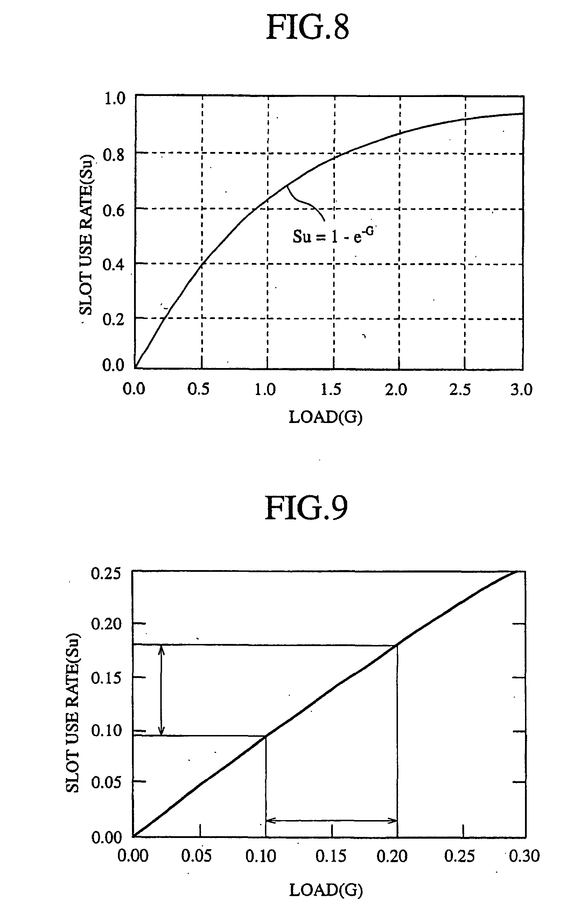

Fig. 8 is a graph showing a relation between the load G and the slot use rate Su obtained according to the above equation. Because the slot use rate Su is one-valued function of the load G, the slot use rate Su relates to the load G in one-to-one correspondence. Fig. 9 is a view showing a range of the slot use rate corresponding to a range of the load G set as a use range of the channel. As shown in Fig. 9, in cases where the use of the channel is, for example, intended so as to set a value of the load G in a range from 0.1 to 0.2, two values of the slot use rate corresponding to the values 0.1 and 0.2 of the load are obtained according to the relation, a value of the slot use rate corresponding to the value 0.2 of the load is set as an upper limit of the slot use rate, a value of the slot use rate corresponding to the value 0.1 of the load is set as a lower limit of the slot use rate, and the traffic is controlled by using the upper and lower limits as indexes.

In the base station 10, the carrier detection, or the measurement of an electric field intensity, is performed for each random access slot. In cases where the electric field intensity of a random access slot is equal to or higher than a threshold value, the random access slot is judged as a used slot. This judgment is performed in a prescribed time period for each sector, and a plurality of used slots are collected for each sector. Thereafter, the number of used slots is divided by the number of all random access slots for each sector, and the slot use rate is calculated for each sector.

Fig. 10 is a flow chart showing a method in which a traffic volume is estimated for each sector to perform the traffic control based on the estimated traffic volume. The traffic control based on the estimated traffic volume for each sector is performed at prescribed time intervals in the control unit 11 of the base station 10. In this method, the number of used random access slots is divided by the number of all random access slots for each sector, and a slot use rate is calculated for each sector (step ST1). When the slot use rates are calculated, each slot use rate is compared with both an upper limit and a lower limit of a load denoting indexes of a use range of the channel (step ST2).

In cases where the slot use rate is higher than the upper limit, the traffic level is heightened by 1, and a random interval is lengthened by 1 (step ST3). Also, in cases where the slot use rate is lower than the lower limit, the traffic level is lowered by 1, and a random interval is shortened by 1 (step ST4). Also, in cases where the slot use rate is equal to a value between the upper limit and the lower limit, a random interval is maintained. Thereafter, the base station 10 simultaneously informs each subscriber station 13 of the changed random interval or the maintained random interval at the broadcast mode (step ST5). Here, the random interval denotes a parameter determining a range of a random number, and a resending time interval in the resending of a reservation packet is obtained from the random number. In this case, the parameter is set to be equal to the traffic level informed from the base station 10 for each sector.

When the load G in the equation (1) based on the slotted ALOHA method is eliminated by using the equation (3),

$$S = -\ln(1 - Su) \times e^{\ln(1 - Su)}$$
$$= -(1 - Su) \times \ln(1 - Su) \qquad (4)$$

is obtained. Fig. 11 is a graph showing a relation between the slot use rate Su obtained from the equation (4) and the throughput S.

A theoretical value of the throughput is obtained from a measured value of the slot use rate obtained in the base station 10 by using the equation (4), and a throughput reducing rate is examined by comparing the theoretical value of the throughput with the measured value of the throughput. Therefore, a frequency that the subscriber stations fail in the random access due to causes other than the congestion of the channel can be estimated. That is, in cases where a reservation packet, which is proper to be passed to the base station 10, is not passed to the base station 10 due to causes other than the congestion of the channel such as error of the radio channel, the measured value of the throughput is lower than the theoretical value of the throughput. Therefore, the influence of the causes other than the congestion of the channel on the passage of the reservation packet, or the successful performance of the random access, can be estimated by examining the throughput reducing rate.

As is described in a letter of "Analysis and Modeling of WWW Traffic for Designing Internet Access Network" written by NABE and et al., Technical Report of the Institute of Electronics, Information and Communication Engineers, Vol. J80-B-I, No. 6, pp428-437, it has been studied that connection occurrence intervals in many types of internet traffics (telnet, ftp and http) are distributed in an exponential distribution or at random. Therefore, on the assumption that the transmission traffic of packets sent from subscriber stations according to the slotted ALOHA method occurs at random, it is proper that the study of the letter is applied for the present invention.

(2) A control operation for the traffic congestion

In this embodiment, the resending time interval is set to a multiple of the number of sectors because each subscriber station belongs to one of the sectors. Also, an upper limit of the resending time interval (or an upper limit of a random number) is defined as follows.

$$N \text{ frames} \times 2^{\text{random interval-1}} \tag{5}$$

Here, the symbol N denotes the number of sectors. In this definition, when the random interval is heightened to 1, 2, 3,---, the number of waiting frames is exponentially heightened to N, 2N, 4N,---. The subscriber station 13 has await during a passing time of the waiting frames.

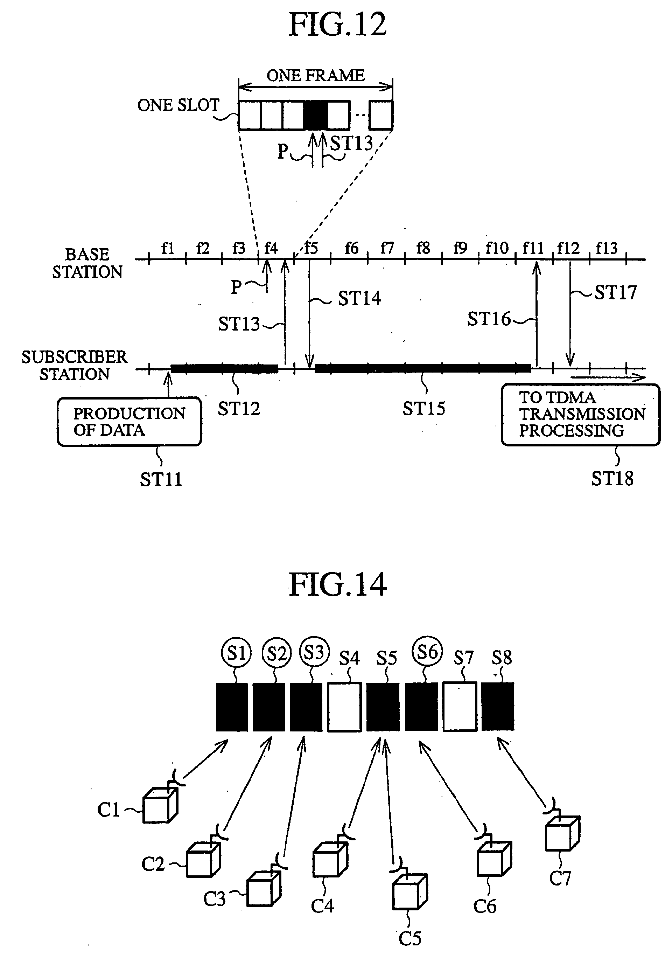

Also, in the present invention, in addition to the resending, the subscriber station 13 has a wait during a time period set at random according to a traffic volume at a time of the sending even though the sending is the first time. Fig. 12 is a view showing an example of timing of the sending of a reservation packet to a reserved transmission TDMA slot. Here, in this case, the number of sectors is three, and the random interval is two. Also, in this case, an upper limit of the resending time interval (or an upper limit of a random number) is set to six frames according to the equation (5). That is to say, the upper limit of the number of waiting frames is six. The subscriber station 13 has a wait during a passing time of the waiting frames.

An example of a control of a wait before the sending of a packet will be described. When data is produced in a subscriber terminal 18 of a remarked subscriber station 13 (step ST11), the sending of a reservation packet is promptly performed in the prior art. However, in the present invention, a random interval corresponding to a traffic volume at this time is substituted into the equation (5) to determine an upper limit of the resending time interval (or an upper limit of a random number), and the subscriber terminal 18 has a wait during a passing time of a plurality of frames determined from the random number of which the upper limit is limited by the random interval (step ST12). Thereafter, one slot is selected at random from a plurality of random access slots placed in one frame, and a reservation packet is sent from the remarked subscriber station 13 to the base station 10 by using the selected random access slot (step ST13). In Fig. 12, the remarked subscriber station 13 has a wait during a passing time of three frames, and a reservation packet for a reserved transmission TDMA slot is sent at a time of the frame F4.

As is shown in an enlarged view of the frame F4 of Fig. 12, in cases where a reservation packet (indicated by an arrow P in Fig. 12) using the same random access slot as that used by the remarked subscriber station 13 is sent from another subscriber station 13, the reservation packet sent from the remarked subscriber station 13 cannot be passed to the base station 10 by using the random access channel 6, and the remarked subscriber station 13 fails in the random access. Because the remarked subscriber station 13 cannot judge whether or not the reservation packet sent from the remarked subscriber station 13 is passed to the base station 10, the base station 10 informs all subscribers of information of a plurality of subscribers, from which reservation packets are sent and passed to the base station 10, at a time of the next frame F5 by using the information notifying channel 5 (step ST14). In this case, to save the radio communication resource, it is preferred that the base station 10 informs all subscribers of only identification numbers of the subscribers from which reservation packets are sent and passed to the base station 10.

In cases where no identification number of the remarked subscriber station 13 is listed in a table of the identification numbers of the subscribers sent from the base station 10 to the remarked subscriber station 13, the remarked subscriber station 13 judges that the remarked subscriber station 13 fails in the random access, and an operation of preparing the resending of the reservation packet is started in the remarked subscriber station 13. In this case, to prevent the reservation packet from colliding again with that sent from the subscriber station 13 with which the reservation packet sent from the remarked subscriber station 13 collided at a previous sending time, a waiting time (or a standby time) is determined at random in the same manner as in the previous sending, and the remarked subscriber station 13 has a wait during the determined waiting time. In the example shown in Fig. 12, the remarked subscriber station 13 has a wait during a passing time of six frames before the frame F11 (step ST15). Thereafter, the reservation packet is again sent by using the random access channel 6 (step ST16). In cases where the reservation packet is passed to the base station 10 in the random access operation again performed, the reservation for a reserved transmitted TDMA slot is performed. In Fig. 12, the base station 10 sends an informative signal to inform all subscribers of identification numbers of the subscribers, from which reservation packets are sent and passed to the base station 10, at a time of the frame F12 (step ST17). In the remarked subscriber station 13, the TDMA transmission processing is performed according to conditions of the allocation of the reserved transmission TDMA slots indicated by the informative signal (step ST18).

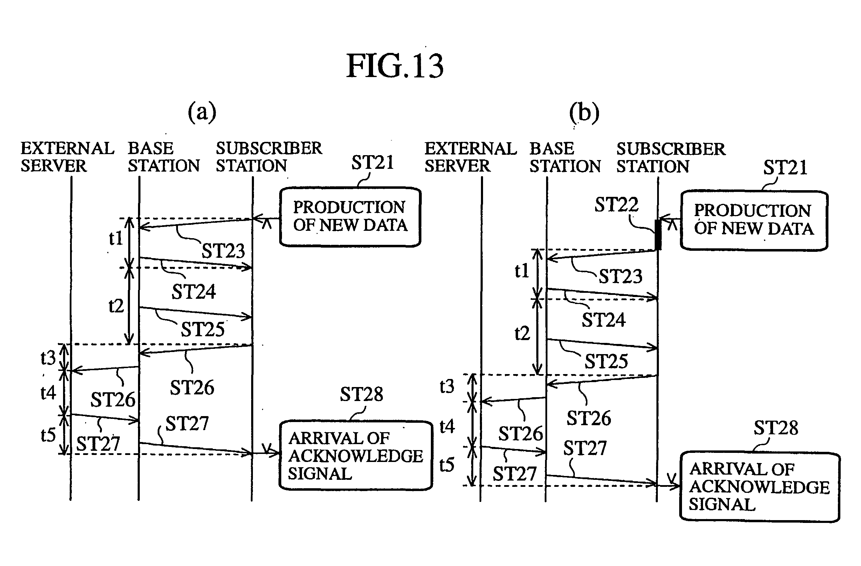

Also, a merit obtained by sending a reservation packet after the wait of a prescribed time period in the first sending of the reservation packet will be described below. Fig. 13 is a view showing the procedure in which a subscriber station 13 get access to an external server such as a Web server. In Fig. 13, the access procedure based on the prior art is shown in Fig. 13(a), and the access procedure based on the present invention is shown in Fig. 13(b). The access procedure based on the present invention differs from the access procedure based on the prior art in that a subscriber station 13 has a wait during a prescribed time period before the first sending of a reservation packet.

In the access procedure based on the prior art, when data of a packet is newly produced in a subscriber terminal (step ST21), a reservation packet is sent out from the subscriber station of the subscriber terminal with the random access by using the random access channel 6 (step ST23). When the reservation packet is passed to the base station 10, an informative signal indicating the success of the random access is sent from the base station 10 to the subscriber station (step ST24). Thereafter, an allocation signal, which indicates the allocation of a reserved transmission TDMA slot to the subscriber station, is sent from the base station 10 to the subscriber station (step ST25). A data packet including the newly produced data is sent from the subscriber station to the base station 10 by using the reserved transmission TDMA slot allocated to the subscriber station. Thereafter, the data packet is sent from the base station 10 to an external server (step ST26). In the external server, the data of the data packet is processed, and an acknowledge signal is sent from the external server to the subscriber station to inform the subscriber station of the processing of the data (step ST27). Therefore, because the acknowledge signal is returned to the subscriber station, the subscriber station can confirm that the packet data is correctly transmitted to the base station 10, and the sending of a next data packet is prepared in the subscriber station (step ST28).

A time period from the production of the packet data (step ST21) to the confirmation of the acknowledge signal (step ST28) is roughly obtained by adding up a time period T1 (in Fig. 13, this time period is shortened because of no resending) required for the passage of the reservation packet (or the success of the random access), a time period T2 required for the processing of the allocation of the reserved transmission TDMA slot to the subscriber station, a time period T3 required for the transmission of the data packet from the subscriber station to the external server through the base station 10 and the external network 17, a time period T4 required for the production of the acknowledge signal in the external server and a time period T5 required for the transmission of the acknowledge signal from the external server to the subscriber terminal 18 through the external network 17 and the base station 10. As a summed time period (or a sum of the time periods T1 to T5) is lengthened, a time period from the production of the packet data to the production of the next packet data is lengthened.

In the TCP/IP, after the sending of a previous packet from a subscriber station, unless the acknowledge signal is received in the subscriber station, a new packet is not sent from the subscriber station. That is to say, the reception of the acknowledge signal corresponding to. the sending of a previous packet triggers the occurrence of a new packet. In the present invention, as shown in Fig. 13(b), when a new packet of data produced in the subscriber terminal 18 is sent to the subscriber station, a reservation packet for a reserved transmission TDMA slot is not promptly sent out from the subscriber station, but the subscriber station has a wait during a waiting time before the sending of the reservation packet (step ST22). In this case, a total time period of the transmission of one packet from the production of the packet data to the reception of the acknowledge signal in the subscriber station is lengthened by the waiting time. Because it cannot be judged in the subscriber terminal 18 where the cause of the lengthening of the total time period occurs in the communication network, it is observed in the subscriber terminal 18 that the reception of the acknowledge signal sent in response to the reservation packet is merely delayed. Therefore, because a next data packet is not produced until the acknowledge signal is received in the subscriber station, the production of the data packet in the subscriber terminal 18 is limited. That is to say, because the subscriber station waits before the first sending of a packet according to the congestion of the transmission traffic, a time interval of the packet production in the subscriber terminal 18 is directly limited, and the traffic control can be performed.

(3) An operation for limiting the number of random access trials successfully performed

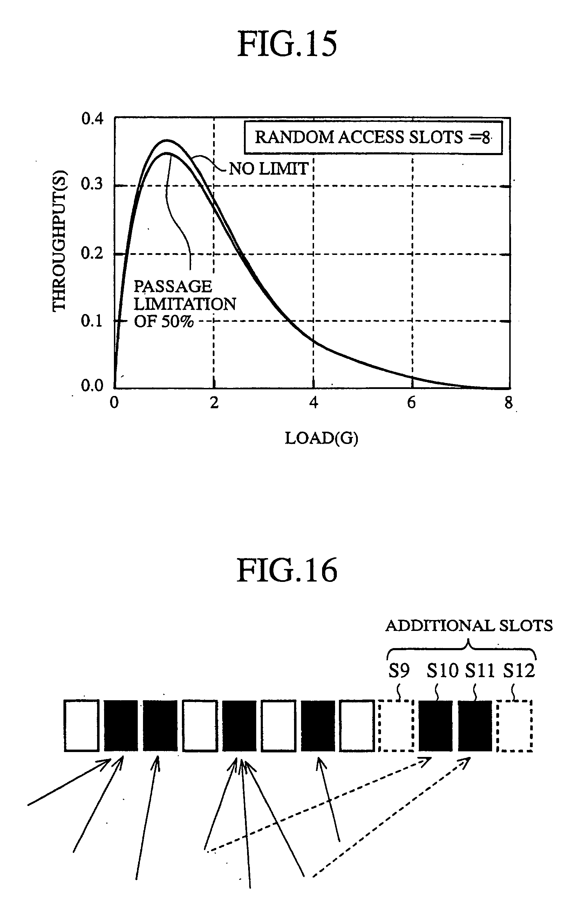

Fig. 14 is a view showing an example of a method of limiting the number of random access trials successfully performed. In this method, the number of subscribers, who are notified as subscribers succeeding in the random access from the base station 10, is limited in a low range for each frame so as to reduce the influence of the random access success on the throughput. Therefore, the number of random access trials successfully performed is limited.

In Fig. 14, in a method according to the prior art, five subscriber stations, who send reservation packets to the random access slots S1, S2, S3, S6 and S8, succeed in the random access. However, in the present invention, the number of successful subscribers in the random access (or the number of reservation packets passed to the base station 10) is limited to a value equal to a half of the number of all random access slots for each frame. Therefore, users, who receive the notice of subscribers succeeding in the random access according to the slotted ALOHA method from the base station 10, are limited to the subscriber stations C1, C2, C3, and C6 who use the slots S1, S2, S3 and S6 selected in order of slot number. That is to say, though the subscriber station C7 actually succeeds in the random access, the subscriber station C7 receives no notice of subscribers succeeding in the random access.

Because the average of the numbers of subscriber stations successfully performing the random access is a low value of 3.7 per frame even in a case where the throughput is maximized, it is rare that a plurality of subscriber stations, of which the number is the same as the number of random access slots to a frame, succeed in the random access. Fig. 15 is a graph showing both a relation between the load and the throughput in case of the limitations on subscriber stations receiving the notice of subscribers succeeding in the random access and a relation between the load and the throughput in case of no limitation on subscriber stations receiving the notice of subscribers succeeding in the random access. In the graph shown in Fig. 15, the number of random access slots to a frame is set to eight, and a maximum value of the number of subscriber stations receiving the notice of subscribers succeeding in the random access is limited to 50% (namely, four) of the number of random access slots to a frame. In this case, theoretical values of the throughput are shown. The calculation of the theoretical values of the throughput is described in detail later. As shown in the graph, even though the number of subscriber stations receiving the notice of subscribers succeeding in the random access is limited, the influence of the limitations on the throughput is low.

Here, in cases where the number of subscriber stations relating to the passage of reservation packets according to the slotted ALOHA method which is possible to be processed at once in the base station 10, or the number of successful subscribers in the random access, is limited, when the number of subscriber stations receiving the notice of subscribers succeeding in the random access is limited for each sector, the number of successful subscribers in the random access can be limited in the base station 10. Also, in cases where the number of subscriber stations receiving the notice of subscribers succeeding in the random access is appropriately set for each sector, all traffics for the base station 10 can be appropriately controlled without giving a considerable influence on the throughput.

(4) An operation for increasing the number of random access trials successfully performed

Fig. 16 is a conceptual view showing a method of performing a control in which the number of random access slots to a sector is increased in cases where the load in an arbitrary sector is high. Also, in this method, the number of subscriber stations receiving the notice of subscribers succeeding in the random access is obtained according to the number of random access slots increased. In Fig. 16, S9 to S12 indicate a plurality of random access slots newly added.

In cases where the number of random access slots is increased, the number of reservation packets passed to the base station 10 is again calculated, and the number of random access slots is set so as to set a loss of reservation packets to an appropriate value. The original throughput corresponding to no limitation of the number of subscriber stations receiving the notice is expressed by a symbol S, the number of random access slots is expressed by a symbol N, and the number of subscriber stations receiving the notice of subscribers succeeding in the random access is expressed by a symbol T. In this case, a throughput $S_T$ corresponding to the limitations of the number of subscriber stations receiving the notice of subscribers succeeding in the random access is expressed as follows by using the S.

$$S_T = \left( \sum_{n=0}^{T} n \cdot {}_N C_n \cdot S^n (1-S)^{N-n} + \sum_{n=T+1}^{N} T \cdot {}_N C_n \cdot S^n (1-S)^{N-n} \right) \Big/ N$$

$$(6)$$

When the throughput $S_T$ is calculated according to the equation (6) by using $S = G \times e^{-G}$, N=8 and T=4, the throughput $S_T$ is shown in Fig. 15 as a graph of the passage limitation of 50%. Here, in the determination of T, a throughput reducing rate $(S - S_T)/S$ is calculated, and a value of T is determined not to reduce the throughput reducing rate so much. The throughput reducing rate denotes a degree of the reduction of the throughput $S_T$ from the original throughput S which corresponds to no limitation of the number of subscriber stations receiving the notice of subscribers succeeding in the random access.

To moderate the congestion of the traffic, the performance of a control method of increasing the number of random access slots or the performance of a control method of widening the random interval to lengthen the resending time interval is considered. The selection of the control methods is determined according to the reservation condition of the reserved transmission TDMA slots in the TDMA channel. The reservation condition in the TDMA channel can be, for example, judged according to the slot use rate of the TDMA channel. In detail, the selection of the control methods is determined by considering that the number of reservations of the reserved transmission TDMA slots is increased when the number of random access slots is increased. Also, the selection of the control methods is determined by considering that the number of reservations of the reserved transmission TDMA slots is decreased when the random interval is lengthened.

Because the radio random access control method according to the first embodiment has the above described features, the radio random access control method has following effects. To clarify the explanation of the effects of the radio random access control method, the effects of the radio random access control method are classified into four groups corresponding to the four operations described above, and each group of effects is described.

(1) Effects relating to the operation for detecting a degree of the traffic congestion

The volume of the traffic of reservation packets sent from a group of subscriber stations of each sector is estimated and controlled. Therefore, even though a traffic of reservation packets sent from an arbitrary subscriber station is not maintained to a uniform volume, a traffic of reservation packets sent from a plurality of subscriber stations including the arbitrary subscriber station in one sector is controlled according to the slot use rate calculated for the sector so as to suppress a sudden change of the traffic. Accordingly, the traffic can be appropriately controlled for each sector.

Also, the range of the load set as the use range of the channel is converted into the range of the slot use rate, and the traffic is estimated on the basis of the slot use rate measured in the base station 10. Therefore, because the traffic control based on the load can be substantially performed, even though the traffic is changed at a burst, the traffic can be rapidly and appropriately controlled as compared with the traffic control based on a resending rate (a ratio of the number of resending operations to the number of total sending and resending operations) of reservation packets relating to the resending time interval.

Also, the relation between the load and the slot use rate is theoretically calculated. Therefore, in cases where the communication environment is changed due to the increase or decrease of the number of random access slots or another change, the range of the slot use rate can be easily obtained from the range of the load relating to the use of the channel which changes with the communication environment. Accordingly, as compared with a method of estimating the congestion of the traffic according to the resending rate, the traffic can be flexibly controlled even though the communication environment is changed, and a point-to-multipoint type radio access system widely used can be obtained.

(2) Effects relating to the control operation for the traffic congestion

The first sending of a reservation packet to a reserved transmission TDMA slot is delayed so as to lengthen the random interval according to the congestion of the traffic. Therefore, even though a channel characteristic has been already placed in an area of a right-sided curved line of the graph shown in Fig. 2 in the first sending of a reservation packet due to the congestion of the traffic, the channel can be used according to the operation characteristic of a left-sided curved line of the graph shown in Fig. 2 by increasing the random interval. Accordingly, the traffic relating to the random access can be appropriately controlled.

Also, a total time period relating to one packet sending operation (the sending of one reservation packet and the sending of one data packet) from the production of the data packet in the subscriber terminal to the reception of an acknowledge signal, which indicates the confirmation of the arrival of the data packet sent from the subscriber terminal at the external server, can be lengthened by a waiting time (or a standby time) of the first sending of the reservation packet. Accordingly, as compared with a traffic control method in which the data packet produced in the subscriber terminal is buffered in the subscriber station, the burden on the subscriber station can be reduced. In particular, in cases where many subscriber terminals are connected to one subscriber station, an overflow of data packets in a buffer of the subscriber station can be effectively prevented.

Also, in cases where a subscriber station fails in the random access at a high probability due to the congestion of the random access channel 6, the random interval is lengthened in the first sending of a reservation packet from the subscriber station so as to reduce the number of reservation packets sent from the subscriber station. Accordingly, in cases where a mobile communication terminal is, for example, used as a subscriber terminal, an electric power consumed in the mobile communication terminal can be reduced.

(3) Effects relating to the operation for limiting the number of random access trials successfully performed

The number of subscriber stations receiving the notice of subscribers succeeding in the random access is limited for each frame. Therefore, in cases where the number of subscriber stations receiving the notice of subscribers succeeding in the random access is appropriately set, an area of the information notifying channel 5, which is occupied by a plurality of identification numbers of the successful subscribers of the random access described in the notice, can be reduced. Accordingly, a radio communication resource can be effectively used.

(4) Effects relating to the operation for increasing the number of random access trials successfully performed

In cases where the load on an arbitrary sector is high, to control the congestion of the traffic of the arbitrary sector, the number of random access slots relating to the arbitrary sector is increased by adding a random access slot or a plurality of random access slots, and the number of random access slots selectable in the sending of each reservation packet is increased. Therefore, because reservation packets are transmitted on the added random access slots, the traffic of the arbitrary sector is dispersed, a degree of the collision of the reservation packets of the subscriber stations of the arbitrary sector is decreased, and the throughput is increased. Accordingly, because the number of reservation packets resent from the subscriber stations is decreased, the traffic volume can be effectively controlled.

Also, in cases where the number of random access slots to a frame is dynamically changed, the relation between the number of random access slots and the traffic is changed. However, because the traffic is estimated according to the slot use rate, it is not required to change threshold values (an upper limit and a lower limit) of a range of the slot use rate regarded as a use range of the channel. Accordingly, even though the communication environment is dynamically changed, the traffic can be flexibly controlled in the point-to-multipoint type radio access system.

Also, in cases where the random access slot reservation composite method is used, either the processing for increasing the number of random access slots or the processing for increasing the random interval can be selected according to the congestion condition of the traffic of the TDMA channel. Accordingly, because the number of reservations of the reserved transmission TDMA slots can be increased or decreased, the traffic volume of the upward TDMA channel 7 can be maintained to an optimum condition.

INDUSTRIAL APPLICABILITY

As is described above, the radio random access control method according to the present invention is appropriate to perform the traffic control rapidly and flexibly even though the traffic in the first sending of packets is increased at a burst.

**Claims**

1. A radio random access control method, comprising the steps of:

   dividing a communication access zone managed by a base station into a plurality of sectors; and
   performing communication between the base station and a subscriber station or a plurality of subscriber stations belonging to one sector for each sector,

   **characterized in that** the step of performing the communication comprising the steps of:

   converting a range of a load regarded as a use range of a channel into a range of a slot use rate;
   comparing a value of the slot use rate measured in the base station with the range of the slot use rate regarded as the use range of the channel; and
   controlling a communication traffic volume according to the comparison of the measured value of the slot use rate with the range of the slot use rate.

2. A radio random access control method according to claim 1, wherein the step of comparing the value of the slot use rate includes a step of

   performing carrier detection for a random access time slot or a plurality of random access time slots used in a slotted ALOHA method to obtain the value of the slot use rate, and
   the step of controlling the communication traffic volume includes a step of
   controlling a standby time, which extends until the resending of a packet, according to the value of the slot use rate for each sector.

3. A radio random access control method according to claim 1, wherein the step of comparing the value of the slot use rate includes a step of

   performing carrier detection for a random access time slot or a plurality of random access time slots used in a slotted ALOHA method to obtain the value of the slot use rate, and
   the step of controlling the communication traffic volume includes a step of
   controlling a standby time according to the value of the slot use rate for each sector when a packet is first sent.

4. A radio random access control method according to claim 1, wherein the number of subscriber stations receiving a notice of subscribers succeeding in the random access is limited.

5. A radio random access control method according to claim 1, wherein the number of random access slots is increased according to the load in the random access for each sector.

6. A radio random access control method according to claim 1, wherein the step of controlling the communication traffic volume includes a step of

selecting either processing of increasing the number of random access slots or processing of increasing a standby time extending until the sending of a reservation packet according to a congestion condition of a time division multiple access channel having a reserved transmission TDMA slot or a plurality of reserved transmission TDMA slots, which are used to send data packets, in a case of a random access slot reservation composite method in which the reservation packet is sent with the random access to request a reservation for one reserved transmission TDM slot of the base station.

# FIG.1

# FIG.2

# FIG.3

| | FRAME 1 | FRAME 2 | FRAME 3 | FRAME 4 | FRAME 5 | FRAME 6 |
|---|---|---|---|---|---|---|
| RECEPTION DATA OF TWO FRAMES JUST BEFORE CURRENT TIME | (0) | (0) | (2) | (4) | (4) | |
| AVERAGE OF THE NUMBERS OF SENDING TRIALS IN TWO FRAMES JUST BEFORE CURRENT TIME | (0) | (0) | (1.0) | (1.0) | (0.75) | |

CENTER STATION C

COLLISION  COLLISION  A1  B1  C1  A2  B2  C2  A3
⊠  ⊠  (1)(1)⊠(1)(1)  (0)  (1)(1)

LEVEL 0 — NO RECEPTION CONFIRMATION

LEVEL 0 — NO RECEPTION CONFIRMATION

LEVEL 1 — RECEPTION CONFIRMATION FOR A1 AND B1

LEVEL 1 — RECEPTION CONFIRMATION FOR A2 AND B2

THE NUMBER OF SENDING TRIALS

PERIPHERAL STATION T1

A1 (0)  A2 (0)  A1 (1)  A3 (0)  A2 (1)  A3 (1)

RANDOM NUMBER 0  RANDOM NUMBER 1  RANDOM NUMBER 3

PERIPHERAL STATION T2

B1 (0)  B1 (1)  B2 (0)

RANDOM NUMBER 1

PERIPHERAL STATION T3

C1 (0)  C2 (0) C1 (1)  C2 (1)

RANDOM NUMBER 0  RANDOM NUMBER

| FRAME 1 | FRAME 2 | FRAME 3 | FRAME 4 | FRAME 5 | FRAME 6

EP 1 182 826 A1

EP 1 182 826 A1

# FIG.4

THIRD SECTOR

$3_1$ ... $3_n$

SECOND SECTOR

$2_1$ ... $2_m$

$1_1$

4

FIRST SECTOR

$1_2$ ... $1_1$

# FIG.5

ONE FRAME

5   6   7   8

| INFORMATION NOTIFYING CHANNEL | RANDOM ACCESS CHANNEL | UPWARD RESERVED TRANSMISSION TDMA CHANNEL | DOWNWARD TDMA CHANNEL |

R1 | R2 | R3 | ... | Rn     T1 | T2 | T3 | ... | Tn

RANDOM ACCESS SLOTS     RESERVED TRANSMISSION TDMA SLOTS

# FIG.6

| CONTROL UNIT | ~14 |
| BUFFER | ~15 |

13

16

10

CONTROL UNIT ~11

BUFFER ~12

18

SUBSCRIBER TERMINAL

SUBSCRIBER STATION

17

BASE STATION

EXTERNAL NETWORK

# FIG.7

RANDOM ACCESS SLOTS

S1  S2  S3  S4  S5  S6  S7  S8

SLOT FOR CARRIER DETECTION

C1

C2

C3

C4

C5

C6

C7

# FIG.8

$Su = 1 - e^{-G}$

# FIG.9

# FIG.10

```
                    ┌─────────────┐
                    │    START    │
                    └─────────────┘
                           │
                           ▼
        ┌──────────────────────────────────────┐        ST1
        │ CALCULATION OF SLOT USE RATE FROM     │───╮
        │ THE NUMBER OF ALL SLOTS AND THE       │
        │ NUMBER OF USED SLOTS                  │
        └──────────────────────────────────────┘
                           │
                           ▼               ST2
                     ╱─────────────╲───╮
                    ╱ SLOT USE RATE ╲
                     ╲─────────────╱
                           │
                        >max     ┌──────────────────────────────────┐   ST3
                           ├──────│ TRAFFIC LEVEL IS HEIGHTENED BY 1 │───╮
                           │      └──────────────────────────────────┘
                        <min      ┌──────────────────────────────────┐   ST4
                           ├──────│  TRAFFIC LEVEL IS LOWERED BY 1    │───┤
                           │      └──────────────────────────────────┘
                           ▼
        ┌──────────────────────────────┐   ST5
        │ SIMULTANEOUSLY-INFORMING      │
        │ OF RANDOM INTERVAL            │
        └──────────────────────────────┘
                           │
                           ▼
                    ┌─────────────┐
                    │     END     │
                    └─────────────┘
```

# FIG.11

$$S = -(1-Su)\log(1-Su)$$

Graph of THROUGHPUT(S) versus SLOT USE RATE(Su).

# FIG.12

ONE FRAME

ONE SLOT

P  ST13

BASE STATION

f1 f2 f3 f4 f5 f6 f7 f8 f9 f10 f11 f12 f13

P

ST13 ST14 ST16 ST17

SUBSCRIBER STATION

PRODUCTION OF DATA

ST12 ST15

TO TDMA TRANSMISSION PROCESSING

ST11 ST18

# FIG.14

S1 S2 S3 S4 S5 S6 S7 S8

C1

C2

C3 C4

C5

C6

C7

# FIG.13

(a)

EXTERNAL     BASE        SUBSCRIBER
SERVER       STATION     STATION          ST21

PRODUCTION
OF NEW DATA

t1

ST23

t2

ST24

ST25

t3

t4         ST26          ST26                         ST28

ST27         ST27                    ARRIVAL OF
t5  ST27                             ACKNOWLEDGE
                                     SIGNAL

(b)

EXTERNAL     BASE        SUBSCRIBER
SERVER       STATION     STATION          ST21

ST22                     PRODUCTION
                         OF NEW DATA

t1

ST23

t2

ST24

ST25

t3

t4         ST26          ST26

ST27                                        ST28
t5  ST27          ST27
                                     ARRIVAL OF
                                     ACKNOWLEDGE
                                     SIGNAL

EP 1 182 826 A1

# FIG.15

# FIG.16

# INTERNATIONAL SEARCH REPORT

International application No.

PCT/JP01/01427

**A. CLASSIFICATION OF SUBJECT MATTER**
Int.Cl$^7$   H04L12/28

According to International Patent Classification (IPC) or to both national classification and IPC

**B. FIELDS SEARCHED**

Minimum documentation searched (classification system followed by classification symbols)
Int.Cl$^7$   H04L12/28

Documentation searched other than minimum documentation to the extent that such documents are included in the fields searched
Jitsuyo Shinan Koho        1926-2001     Kokai Jitsuyo Shinan Koho    1971-2001
Toroku Jitsuyo Shinan Koho 1994-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 6-252917, A (NEC Corporation), 09 September, 1994 (09.09.94), & EP, 619664, A2    & US, 5434847, A & CA, 2116412, A    & CN, 1099919, A | 1-6 |
| A | JP, 6-216901, A (NEC Corporation), 05 August, 1994 (05.08.94) (Family: none) | 1-6 |

☐ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 May, 2001 (17.05.01) | 29 May, 2001 (29.05.01) |

| Name and mailing address of the ISA/ | Authorized officer |
|---|---|
| Japanese Patent Office | |
| Facsimile No. | Telephone No. |

Form PCT/ISA/210 (second sheet) (July 1992)